# EUROPÄISCHE PATENTANMELDUNG

(11) **EP 1 788 344 A1**
(43) Veröffentlichungstag der Anmeldung: **23.05.2007**
(21) Anmeldenummer: 06023730.2
(22) Anmeldetag: 15.11.2006
(51) Int. Cl.: G01B 7/16, G01B 5/30, G01N 25/16

(54) **Verfahren und Vorrichtung zur zerstörungsfreien Messung von Oberflächenspannungen an Gegenständen**

(30) Priorität: 15.11.2005 DE 102005054803
(71) Anmelder: Horst Benzing -Feinwerktechnik GmbH, 78056 Villingen-Schwenningen (DE)
(72) Erfinder: Laun, Uwe, 70563 Stuttgart (DE)
(74) Vertreter: Maser, Jochen

(57) **Zusammenfassung**

Die Erfindung betrifft ein Verfahren und eine Vorrichtung (11) zur zerstörungsfreien Messung von Oberflächenspannungen an Gegenständen (12), insbesondere mechanischen Eigenspannungen. Die Vorrichtung (11) wird an einer Messstelle (14) auf die Oberfläche des Gegenstandes (12) aufgesetzt, wobei zumindest ein Messfühler (23) einer Längenmesseinrichtung der Vorrichtung (11) an der Oberfläche (16) des Gegenstandes (12) angreift. Mit einer Einrichtung (18) zur Erzeugung einer Energie wird eine Temperaturänderung an der Messstelle (14) erzeugt. Eine Abstandsänderung während der thermischen Änderung an der Messstelle (14) wird von der Längenmesseinrichtung erfasst. Ferner ist eine Druckkrafteinrichtung (24) vorgesehen, die den zumindest einen Messfühler (23) mit einer Anpresskraft gegen die Oberfläche des Gegenstandes (12) beaufschlagt.

## Beschreibung

Die Erfindung betrifft ein Verfahren zur zerstörungsfreien Messung von Oberflächenspannungen an Gegenständen sowie eine Vorrichtung, insbesondere zur Durchführung des Verfahrens.

Bei der Herstellung sowie während der Bearbeitung von Gegenständen können mechanische Eigenspannungen im Oberflächenbereich des Materials der Gegenstände entstehen. Diese mechanischen Eigenspannungen beeinflussen nachteilig die Qualität des Gegenstandes. Beispielsweise können bei rotationssymmetrischen Werkzeugen durch Härten, Umformen oder spanabhebende Verfahren verspannte Oberflächenbereiche erzeugt werden, die zu einem unerwünschten Verzug des Werkstückes führen. Dieser unerwünschte Verzug stellt sich insbesondere dann ein, wenn die Werkstücksymmetrie beispielsweise durch Bohren oder Fräsen aufgehoben wird. Darüber hinaus können sich auch durch mechanische Belastungen, die beim Gebrauch des Gegenstandes auftreten, Eigenspannungen entstehen. Insbesondere bei sicherheitsrelevanten Bauteilen ist die Erkennung von solchen mechanischen Eigenspannungen von Bedeutung, da sich die Materialeigenschaften dadurch nachteilig ändern und die auftretenden Beanspruchungen nicht mehr bewältigt werden können.

Aus der DE-PS 1 153 192 geht ein Dehnungsmesser mit drei im Dreieck angeordneten Messspitzen hervor, welche auf die Messoberfläche aufgesetzt werden. Die an den Füßen angeordneten Messspitzen sind derart an einem Zwischenstück gelenkig befestigt, dass sie unabhängig voneinander in verschiedenen, sich in der Achse des Gerätes schneidenden Ebenen schwenkbar sind. Durch zwischen den Füßen angeordneten elektrischen Gebern wird eine Längenänderung der Füße respektive der Messspitzen erfasst.

Aus der DE-AS 1 698 150 geht des weiteren ein Messkopf zur Ermittlung von mehrachsigen Spannungszuständen in Werkstücken hervor. Dieser Messkopf umfasst paarweise einander zugeordnete Tastspitzen, wobei mehrere Abtastspitzenpaare im Winkel versetzt zueinander angeordnet sind. Die Tastspitzen werden auf der Messoberfläche aufgesetzt. Bei einer Längenänderung durch einen Temperatureintrag werden diese Tastspitzen relativ zueinander bewegt, wobei die Längenänderung über ein an einer Feder gelagerten Quarzrohr auf eine Platte übertragen wird, an welcher Dehnmessstreifen vorgesehen sind.

Die beiden vorgenannten Vorrichtungen weisen den Nachteil auf, dass durch das Aufbringen der Spitzen auch die Oberfläche des Messgegenstandes eine Beschädigung der Messoberfläche gegeben sein kann. Des Weiteren kann bei diesen Messmethoden weder die gewünschte Auflösung noch der erforderliche Zeitrahmen für eine Einzelmessung eingehalten werden. So zum Beispiel ist die Analytik für eine produktionsnah einsetzbare Spannungsdetektion sehr aufwändig. Die ebenfalls bekannte Messung mechanischer Eigenspannungen mit Hilfe von akustischer Mikroskopie oder die Anwendung von photothermischen Methoden sind nur mit sehr eingeschränkter Genauigkeit möglich.

Der Erfindung liegt deshalb die Aufgabe zugrunde, ein Verfahren sowie eine Vorrichtung zur zerstörungsfreien Messung von Oberflächenspannungen, insbesondere mechanischen Eigenspannungen, an Gegenständen zu schaffen, welche eine einfache Anwendung sowie schnelle und exakte Ermittlung von mechanischen Eigenspannungen ermöglicht.

Diese Aufgabe wird erfindungsgemäß durch ein Verfahren gemäß den Merkmalen des Anspruchs 1 sowie eine Vorrichtung gemäß den Merkmalen des Anspruchs 5 gelöst.

Das erfindungsgemäße Verfahren zur zerstörungsfreien Messung von Oberflächenspannungen an Gegenständen ermöglicht eine einfache Handhabung sowie kostengünstige und schnelle Messung von Spannungen, die von außen durch eine Last in den oberflächennahen Bereich eingebracht werden oder von vorhandenen mechanischen Spannungszustände, die sowohl während der Produktion entstehen oder bereits bestehen. Des weiteren ist die technische Überwachung von Gegenständen auf zulässige Spannungen ermöglicht. Durch die an der Oberfläche des zu prüfenden Gegenstandes an Messpunkten unmittelbar angreifende Messfühler werden aufgrund der Temperaturänderungen die thermischen Ausdehnungen oder ein Ausdehnungsverhalten an oder nahe der Messstelle erfasst. Die Ausdehnungen an der Oberfläche bei Gegenständen, die frei von Oberflächenspannungen oder mechanischen Eigenspannungen sind, weichen im Vergleich zu den Gegenständen, die Oberflächenspannungen beziehungsweise mechanische Eigenspannungen aufweisen, voneinander ab, so dass aus einer solchen Differenz eine einfache Analyse und Erfassung von Eigenspannungen ermöglicht ist. Dabei wird auf die Spannungsabhängigkeit des linearen thermischen Ausdehnungskoeffizienten zurückgegriffen, anhand dessen bei bekannten Temperaturenänderungen eine thermische Ausdehnung erfasst wird. Eine solche Abstandsänderung steht in direkter Relation zu einem linearen thermischen Ausdehnungskoeffizienten eines Werkstoffes. Dadurch kann aufgrund der Abstandsmessung sowie der Temperaturänderung die thermische Ausdehnung erfasst werden. Durch die Anwendung des Verfahrens kann an beliebigen Stellen des Gegenstandes sowohl innerhalb von einzelnen Produktionsschritten als auch bei der technischen Überwachung und Überprüfung von sich im Einsatz befindenden Gegenständen eine flexible und einfache Durchführung der zerstörungsfreien Messung von Eigenspannungen gegeben sein, ohne dass die Oberfläche des Messgegenstandes verletzt wird. Dadurch kann gleichzeitig die Vorbereitungszeit zur Durchführung einer solchen Messung erheblich minimiert werden.

Nach einer bevorzugten Ausgestaltung der Erfindung ist vorgesehen, dass nach dem Erreichen einer Anpresskraft zur Anlage des Messfühlers auf der Oberfläche des Messgegenstandes ein Signal ausgegeben und eine Temperaturänderung an der Messstelle erzeugt wird. Dadurch kann die Durchführung der Messung automatisiert werden, wobei gleichzeitig sichergestellt ist, dass die erforderliche Mindestanpresskraft für eine sichere Messung vorliegt, bevor die Temperaturänderung erzeugt wird. Nach einer weiteren vorteilhaften Ausgestaltung des Verfahrens ist vorgesehen, dass die Abstandsänderung während eines Temperaturzyklus erfasst wird. Dadurch wird die Abstandsänderung sowohl während einer Aufheiz- als auch der Abkühlphase ermittelt. Dadurch können die Messfühler unbeeinflusst von der Temperatureinbringung eine Änderung der thermischen Ausdehnung an der Oberfläche einer Messstelle erfassen. Alternativ kann vorgesehen sein, dass die Abstandsänderung während der Aufheizphase oder der Abkühlphase erfasst wird. Dadurch kann gleichzeitig ein Vergleich der Abstandsänderung zwischen der Aufheiz- und Abkühlphase erfolgen, so dass ein gemittelter Wert für die thermische Ausdehnung erfasst wird. Alternativ kann die Änderung der Abstandsmessung vor oder nach einer stufenweisen Temperaturänderung erfasst werden und vorzugsweise die erfassten Werte relativ zueinander in Bezug gesetzt werden. Dadurch kann eine exakte Messung erzielt werden, da mehrere kleinere Bereiche der Ausdehnung an der Oberfläche erfasst und zueinander innerhalb eines linearen Bereiches in Relation gesetzt werden können, wodurch eine Redundanz in der Messung und eine gemittelte Messgröße mit höherer Messgenauigkeit erfasst wird.

Nach einer weiteren vorteilhaften Ausgestaltung der Erfindung ist vorgesehen, dass nach der Temperaturerfassung ein Signal an eine Druckkrafteinrichtung ausgegeben wird, welche die Anpresskraft aufhebt. Dadurch wird ermöglicht, dass keine undefinierten Zustände unmittelbar nach dem Abheben der Vorrichtung von der Messstelle erzeugt werden. Gleichzeitig wird die Vorrichtung in eine Ausgangsposition zurückgesetzt, welche für den nachfolgenden Messvorgang vorgesehen ist.

Die erfindungsgemäße Vorrichtung zur zerstörungsfreien Messung von Oberflächenspannungen in Gegenständen, insbesondere zur Durchführung des vorgenannten Verfahrens, ermöglicht eine einfache Handhabung sowie eine schnelle und präzise Spannungsdetektion. Diese Vorrichtung ist aufgrund einer einfachen Analyse von Eigenspannungen sowohl in der Produktion als auch bei der Überwachung und Kontrolle von Gegenständen, insbesondere in der Sicherheitstechnik, verwendbar. Durch die einfache Handhabung kann die Ermittlung von reproduzierbaren Ergebnissen sichergestellt sein.

Durch die Erfassung einer Längenänderung beziehungsweise Abstandsänderung zwischen zumindest zwei Messpunkten auf der Oberfläche an oder nahe der Messstelle durch zumindest einen Messfühler der durch eine Anpresskraft auf der Oberfläche nahe den Messpunkten gehalten ist, kann während einer thermischen Änderung der Messstelle eine Längen- oder Abstandsänderung erfasst werden, die wiederum im Verhältnis zur thermischen Ausdehnung eines Gegenstandes ohne Eigenspannung steht und eine relative Änderung ergibt. Über diese Änderung und dem thermischen linearen Ausdehnungskoeffizienten kann nach dem Hock'schen Gesetz in Kenntnis des E-Modul des Materials von dem zu prüfenden Gegenstand die Zugspannung in der Oberfläche des Gegenstandes errechnet werden.

Nach einer vorteilhaften Ausgestaltung der Vorrichtung ist vorgesehen, dass die Druckkrafteinrichtung mit einem Sensor gekoppelt ist, der die Anpresskraft des zumindest einen Messfühlers oder die erzeugte Druckkraft der Druckkrafteinrichtung überwacht. Sowohl die eine als auch die andere Messgrößenüberwachung ermöglicht, dass ein Temperatureintrag und eine anschließende Messung einer Längenänderung erst dann durchgeführt werden, wenn die erforderliche Mindestanpresskraft auf den beziehungsweise die Messfühler wirkt, so dass dieser beziehungsweise diese die Längenänderungen erfasst beziehungsweise erfassen.

Nach einer weiteren vorteilhaften Ausgestaltung der Vorrichtung ist vorgesehen, dass die Druckkrafteinrichtung pneumatisch, hydraulisch, elektrisch oder mechanisch angetrieben ist. In Abhängigkeit der Größe der Vorrichtungen bzw. deren Ausgestaltung als Standgeräte oder Handgeräte werden die einzelnen Antriebe ausgewählt.

Bevorzugt ist vorgesehen, dass die Druckkrafteinrichtung eine Luftkammer aufweist, die insbesondere mit Druckluft versorgt wird. Somit ist ein einfacher Antrieb gegeben. Zur Messung an ebenen Oberflächen eines Gegenstandes ist die Luftkammer bevorzugt kissenförmig oder schlauchförmig ausgebildet, um eine sichere und vollständige Anlage des Messfühlers zur Oberfläche sicherzustellen. Zur Messung von rohr- oder stabförmigen Oberflächen ist die Luftkammer vorzugsweise als Ring- oder Luftreifen ausgebildet, der den Außenumfang des Gegenstandes vollständig umgibt.

Nach einer weiteren bevorzugten Ausgestaltung der Erfindung ist vorgesehen, dass an einem Gehäuse eine Halteeinrichtung vorgesehen ist, welche insbesondere eine Magnethaltekraft oder Saughaltekraft zwischen einem Gehäuse und dem Gegenstand erzeugt. Dies weist den Vorteil auf, dass die Vorrichtung während der Durchführung der Messung sicher zum Messgegenstand gehalten ist, dass auch eine Verletzungsgefahr während dem Einbringen einer Temperaturänderung verringert ist. Die Ansteuerung der Halteeinrichtung über eine Saugkraft ermöglicht einen universellen Einsatz. Die Aufbringung einer Magnethaltekraft ermöglicht, dass auch hohe Haltekräfte erzielt werden können.

Nach einer weiteren bevorzugten Ausgestaltung der Erfindung ist vorgesehen, dass in dem Gehäuse ein Drucksensor vorgesehen ist, der eine Mindestkraft des Gehäuses am Gegenstand erfasst. Dadurch kann sichergestellt werden, dass die Anpresskraft für den Messfühler gegen die Messoberfläche erst dann aufgebracht wird, wenn die Haltekraft vom Gehäuse zur Oberfläche des Messgegenstandes vorliegt. Gleichzeitig wird dadurch auch eine Sicherung ermöglicht, wonach die Haltekraft der Vorrichtung zum Messgegenstand immer größer als die Anpresskraft ist, die auf den zumindest einen Messfühler wirkt. Somit kann auch einem Benutzer bei der Ausgestaltung der Vorrichtung als Handgerät angezeigt werden, dass erst beim Aufbringen einer Mindesthaltekraft der Messvorgang gestartet werden kann. In der Vorrichtung ist vorteilhafterweise zumindest ein Messfühler als Dehnmessstreifen vorgesehen. Dieser Dehnmessstreifen wird zur Messstelle positioniert, wobei dieser Dehnmessfühler innerhalb der Messstelle oder an diese angrenzend vorgesehen ist. Bevorzugt sind wenigstens zwei Dehnmessstreifen vorgesehen, die paarweise einander gegenüberliegend zugeordnet sind. Durch die paarweise Zuordnung der Dehnmessstreifen kann entlang einer zwischen den Dehnmessstreifen gebildeten Achse die Abstandsänderung während einer thermischen Änderung an der Oberfläche des Gegenstandes erfasst werden.

Des Weiteren kann vorteilhafterweise vorgesehen sein, dass mehrere paarweise einander zugeordnete Dehnmessstreifen in einer Vorrichtung vorgesehen sind, deren Ausrichtung voneinander abweicht. Dadurch kann für jedes Paar von Dehnmessstreifen eine Abstandsänderung in unterschiedlicher Ausrichtung erfasst werden. Durch den Vergleich der Abstandsänderung zueinander kann die Orientierung der maximalen Eigenspannung ermittelt werden.

Eine Einrichtung zum Zuführen von Energie ist vorzugsweise durch eine elektromagnetische Strahlungsquelle gegeben, die zumindest ein Strahlführungselement umfasst, das die elektromagnetische Strahlung der Messstelle zuführt. Bei einer solchen elektromagnetischen Strahlung kann es sich beispielsweise um einen Laser handeln. Weitere, in der Wellenlänge davon abweichende Strahlungen können ebenfalls eingesetzt werden.

Die Einrichtung zum Zuführen von Energie kann alternativ auch durch ein Kontaktelement vorgesehen sein, das über eine Heizwendel aufgeheizt wird und zur Einbringung der Energie auf der Messstelle aufsetzbar ist. Ein solches Kontaktelement kann beispielsweise aus gut- oder hochleitfähigem Material, wie beispielsweise Kupfer, ausgebildet sein, das bevorzugt eine der Messstelle entsprechende Aufsetzfläche oder geringfügig kleinere Aufsetzfläche umfasst.

Ein solches Kontaktelement ist bevorzugt federgelagert in der Vorrichtung vorgesehen, damit dieses nach dem Aufsetzen der Vorrichtung auf der Messstelle zumindest mit einer geringen Anpresskraft an der Oberfläche zur wirksamen Wärmeübertragung aufgesetzt gehalten ist.

Nach einer weiteren alternativen Ausführungsform für die Einrichtung zum Zuführen von Energie ist eine elektromagnetische Spule vorgesehen, die berührungslos nach dem Wirbelstromverfahren die Energie in die Messstelle einbringt. Ein Eisenkern wird nahe zur Messoberfläche positioniert. Vorzugsweise kann eine temperaturunempfindliche Aufsetzkalotte vorgesehen sein, so dass ein definierter Abstand zur Oberfläche des Messgegenstandes gegeben ist.

Nach einer weiteren vorteilhaften Ausgestaltung der Vorrichtung ist vorgesehen, dass zumindest ein der Messstelle zugeordneter Temperaturfühler, vorzugsweise ein federnd auf der Messstelle aufsetzbarer Temperaturfühler oder ein Infrarotsensor, vorgesehen ist. In Abhängigkeit des technischen Aufwandes oder der Anforderung kann somit über eine Kontaktierung als auch kontaktlos die Temperatur an der oder benachbart zur Messstelle erfasst und überwacht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigt:
- Figur 1: eine perspektivische Ansicht einer erfindungsgemäßen Ausführungsform,
- Figur 2: eine schematische Seitenansicht der Ausführungsform gemäß Figur 1 und
- Figur 3: eine schematische Seitenansicht einer weiteren erfindungsgemäßen Ausführungsform.

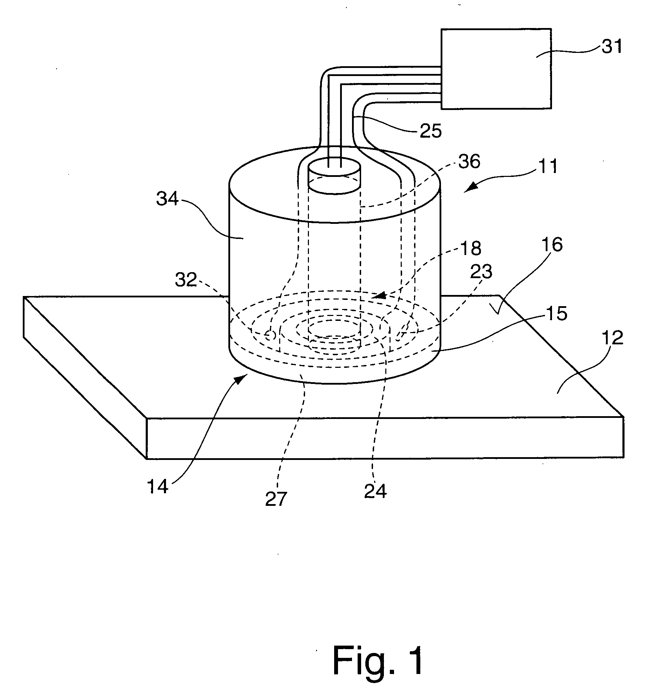

In Figur 1 ist eine perspektivische Darstellung einer erfindungsgemäßen Vorrichtung 11 dargestellt, die auf einem Gegenstand 12 zu einer Messstelle 14 auf einer Oberfläche 16 des Gegenstandes 12 positioniert ist. Die Vorrichtung 11 ist als Messkopf oder Messsonde ausgebildet, wobei ein die einzelnen und nachfolgend beschriebenen Komponenten der Vorrichtung 11 umgebendes Gehäuse nicht näher dargestellt ist. Dieses Gehäuse 15 bildet bevorzugt einen geschlossenen Messkopf, der lediglich zur Messstelle 14 offen ausgebildet ist.

Die Vorrichtung 11 umfasst eine Einrichtung 18 zum Zuführen von Energie. Die Messstelle 14 wird durch die Einrichtung 18 zur Erzeugung einer Energie auf eine Temperatur von beispielsweise 20°C bis 500°C aufgeheizt. Die Aufheiztemperatur wird bevorzugt auf das zu prüfende Material angepasst, so dass die zu erfassende Änderung des Materials an der Messstelle 14 in einem Bereich der linearen thermischen Ausdehnungskoeffizienten der technischen Materialien liegt. Im Ausführungsbeispiel umfasst die Einrichtung 18 einen Ferritkern 19, der von einer Induktionsspule 20 umgeben ist, so dass nach dem Wirbelstromverfahren berührungslos die Messstelle 14 erwärmt werden kann. Die Vorrichtung 11 umfasst des Weiteren zumindest einen Messfühler 23, der im Ausführungsbeispiel insbesondere als Dehnmessstreifen ausgebildet ist. Dieser Messfühler 23 ist auf einer Unterseite einer Druckkrafteinrichtung 24 vorgesehen, welche sich in dem Gehäuse 15 abstützt. Die Druckkrafteinrichtung 24 ist insbesondere als Luftkammer schlauchförmig oder kissenförmig ausgebildet und wird über eine Druckluftzuführleitung 25 versorgt.

In dem Gehäuse 15 ist bevorzugt eine Halteeinrichtung 27 vorgesehen, welche im Ausführungsbeispiel als Magnetring ausgebildet ist. Dadurch kann über die Induktion das Gehäuse 23 in einer Messposition zur Oberfläche 16 des Gegenstandes 12 fixiert werden. Bevorzugt ist die Haltekraft der Halteeinrichtung 27 größer ausgebildet als die auszubringende Anpresskraft über die Druckkrafteinrichtung 24 zur Anlage des Messfühlers 23 an der Messstelle 14. Alternativ kann die Halteeinrichtung 27 eine Saugkraft erzeugen über Saugknöpfe oder dergleichen, so dass eine sichere Befestigung gegeben ist. Sofern in dem Gehäuse 15 keine Halteeinrichtung 27 vorgesehen ist, wird die Haltekraft durch das Bedienpersonal aufgebracht oder über Saugknöpfe, die an dem Gehäuse befestigt sind. Bevorzugt kann ein Sensor vorgesehen sein, der dem Benutzer anzeigt, dass eine Mindesthaltekraft aufgebracht ist.

In dem Gehäuse 15 ist des Weiteren ein Temperaturfühler 32 vorgesehen, der die an die Messstelle 14 einzubringende Temperatur überwacht und die Temperaturänderungen erfasst. Dieser Temperaturfühler 32 kann ebenfalls durch die Druckkrafteinrichtung 24 zu Oberfläche 16 des Gegenstandes 12 fixiert werden. In einer Steuer- und Auswerteeinheit 31 werden die Druckkrafteinrichtung 24 wird die Halteeinrichtung 27 überwacht und bezüglich deren einzelnen Komponenten gesteuert.

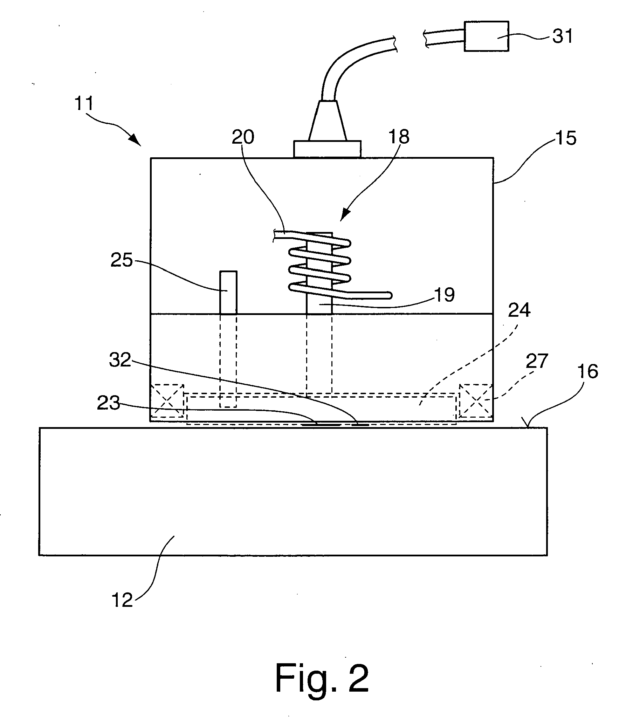

In Figur 2 ist eine schematische Seitenansicht der Ausführungsform in Figur 1 dargestellt, aus der der Aufbau ebenfalls hervorgeht.

Zur Durchführung einer Messung wird die Vorrichtung 11 auf dem mechanische Eigenspannungen aufweisenden Gegenstand 12 zur Messstelle 14 positioniert. Anschließend wir die Halteeinrichtung 27, sofern vorhanden, angesteuert, so dass das Gehäuse 15 fest zum Gegenstand 12 positioniert ist. Sofern die Vorrichtung 11 ohne Halteeinrichtung 27 ausgebildet ist, wird die Haltekraft durch das Bedienpersonal oder externe Befestigungsmittel aufgebracht. Anschließend wird die Druckkrafteinrichtung 24 mit Druckluft über die Druckluftzufuhr 25 versorgt, so dass der zumindest eine Messfühler 23 an der Messstelle 14 und gegebenenfalls der Temperaturfühler 32 zur Anlage kommt und über eine Mindestanpresskraft zur Messstelle 14 gehalten ist. Sobald dieser Zustand erreicht ist, wird bevorzugt über einen Sensor ein Signal an eine Steuer- und Auswerteeinheit 31 gegeben, so dass nunmehr die Einrichtung 18 zum Einbringen von Energie gestartet wird. In Abhängigkeit des Anstieges der Temperatur kann über die Messfühler 23 eine Abstandsänderung an zumindest zwei Messpunkten auf der Oberfläche 16 des Gegenstandes 12 erzielt werden.

Diese Daten werden mit den linearen thermischen Ausdehnungskoeffizienten von Materialien ohne Eigenspannungen verglichen, wobei das Vergleichsmaterial dem zu prüfenden Material entspricht. Durch den Vergleich der Messwerte von dem Gegenstand 12 mit mechanischen Eigenspannungen zu dem unverspannten Material wird ein Verhältnis errechnet. Durch den Vergleich der spannungsinduzierten Dehnung mit einer Dehnung des unverspannten Gegenstandes ergibt sich ein Verhältnis der beiden Längungsarten. Für die Unterscheidung zwischen einer betragsgleichen Druck- beziehungsweise Zugspannung würde sich daraus nach ersten Versuchen eine Varianz von einem linearen thermischen Ausdehnungskoeffizienten von < 10 % ergeben, wodurch eine hinreichend genaue Bestimmung der Spannungsrichtung ermöglicht ist.

Durch eine solche lokale Analyse der mechanischen Eigenspannungen an einer Messstelle 14 mit einem Durchmesser von beispielsweise 1 cm kann innerhalb eines Zeitraumes von beispielsweise 10 sec eine Messwerterfassung durchgeführt werden. Dabei kann die Abstandsänderung in Abhängigkeit von vordefinierten Temperaturerhöhungen oder - erniedrigungen von beispielsweise 100 K erfolgen, um die daraus resultierenden thermischen Änderungen zu erfassen.

Durch die erfindungsgemäße Vorrichtung 11 sowie die Durchführung zur Erfassung der Messwerte ist eine einfache, kostengünstige und schnell durchzuführende thermomechanische Spannungsanalyse ermöglicht, die zur Detektion sich anbahnender Schäden aufgrund von mechanischen Eigenspannungen, insbesondere in sicherheitsrelevanten Teilen, ermöglicht.

Die Einrichtung 18 kann alternativ auch eine Heizpatrone umfassen. Diese Heizpatrone berührt die Oberfläche 16 des Messgegenstandes 12 nicht direkt. Zwischen der Oberfläche 16 und der Heizpatrone ist ein Spalt gebildet, der bevorzugt einige mm dick ausgebildet ist. Dieser Spalt ist mit einem Metall gefüllt, welches bei höheren Temperaturen flüssig wird. Solche Metalle können beispielsweise Indium oder Gallium sein. Dadurch wird nach dem Aufheizen der Heizpatrone ein guter Wärmekontakt mit der Oberfläche 16 des Messgegenstandes 12 hergestellt. Durch den guten Wärmekontakt heizt sich die Oberfläche 16 der Messstelle 14 auf und fängt an sich auszudehnen, so dass eine Längenänderung erfassbar ist. Der Messfühler 23 ist bevorzugt als Dehnmessstreifen ausgebildet, wobei einer der Dehnmessstreifen sensitiv in Richtung Messstelle 14 ausgebildet ist und der andere Dehnmessstreifen seinen elektrischen Widerstand rechtwinklig hierzu verändert. Durch eine solche Anordnung von direkt übereinander oder auch nebeneinander angeordneten Dehnmessstreifen sind die Temperaturverteilungen praktisch gleich, wodurch sich deren Temperaturgang in einer geeigneten Wheatstone-Brücke nahezu vollständig gegenseitig kompensieren.

Im Ausführungsbeispiel wird die durch die thermische Ausdehnung der Oberfläche 16 des Messgegenstandes 12 verursachte Widerstandsänderung von den Dehnmessstreifen im unverspannten Zustand ausgeglichen. Bei einer Erwärmung und demzufolge einer Ausdehnung der Messstelle 14 erfolgt eine thermische Ausdehnung der Oberfläche 16, die radial nach außen von der Messstelle 14 weggerichtet ist, wodurch sich für die Zonen gleicher radialer Dehnung konzentrische Kreise ergeben. Da ein Kreisumfang linear mit einem Kreisradius verknüpft ist, muss der radial ausgerichtete Dehnmessstreifen genauso gedehnt werden, wie der darüber liegende tangent sensitive Dehnmessstreifen. Eine geeignete Wheatstone-Brücke würde also kein Signal liefern. Ist jedoch in der Messstelle 14 des Messgegenstandes 12 ein einachsiger, mechanischer Spannungszustand vorhanden, so gibt der Werkstoff des Messgegenstandes 12 infolge der Erweichung bei höheren Temperaturen dieser Spannung nach. Für eine Zugspannung im Werkstoff des Messgegenstandes 12 bedeutet dies, dass sich in Spannungsrichtung zur thermischen Ausdehnung des Messgegenstandes 12 beim Erwärmen noch ein zusätzlicher Anteil durch das Nachgeben in gleicher Richtung ergibt. Zu diesem Nachgeben gehört aber bei technischen Materialien auch die entsprechende Querkontraktion, wodurch sich zur thermischen Ausdehnung rechtwinklig zur Spannungsrichtung ein dieser Ausdehnung entgegengesetzter Dehnungsanteil ergibt. Tatsächlich gehen die konzentrischen Ringe gleicher Dehnung für den unverspannten Fall in konzentrische Ausdehnungsellipsen für den einachsigen Spannungszustand über. Dadurch kompensieren sich die Dehnungen der überkreuzten Dehnmessstreifen nicht mehr gegenseitig in der Wheatstone-Brücke und das Messsignal ist direkt mit der Größe der mechanischen Spannung verknüpft. Ebenfalls ist das Messsignal direkt noch mit der Erwärmungstemperatur der Messstelle 14 verknüpft. Wird diese Erwärmungstemperatur nun noch während des Heizvorganges beziehungsweise Messvorganges durch ein oder mehrere Thermoelemente 32 auf der Oberfläche 16 des Messgegenstandes 12 gemessen, so kann durch theoretische Überlegungen oder durch einfache Eichung der Vorrichtung 11 die mechanische Spannung im Gegenstand 12 quantitativ ermittelt werden.

Eine weitere vorteilhafte Anordnung der Dehnmessstreifen wären beispielsweise zwei um 90° gedrehte Dehnmessstreifen, die beide radial empfindlich sind und den gleichen Abstand von der Messstelle 14 besitzen. Besonders geeignet ist eine Vollbrücke aus vier radial empfindlichen Dehnmessstreifen, die ebenfalls alle die gleiche Entfernung von der Messstelle 14 besitzen und jeweils um 90° gedreht sind. Die vorgenannten Ausführungen gelten insbesondere für den einachsigen Spannungszustand. Bei vielen Anwendungen ist jedoch die Spannungsrichtung vorgegeben, wie zum Beispiel bei einem Kraftverlauf in einer Querstrebe oder in einem Flugzeuggleitwerk. In anderen Anwendungsfällen werden die Dehnmessstreifen entsprechend den Achsen der Spannungszustände ausgerichtet, um die Änderungen bei der Erwärmung zu erfassen, um entweder die Eigenspannungen zu ermitteln oder die auf- oder eingebrachten Spannungen zu bestimmen.

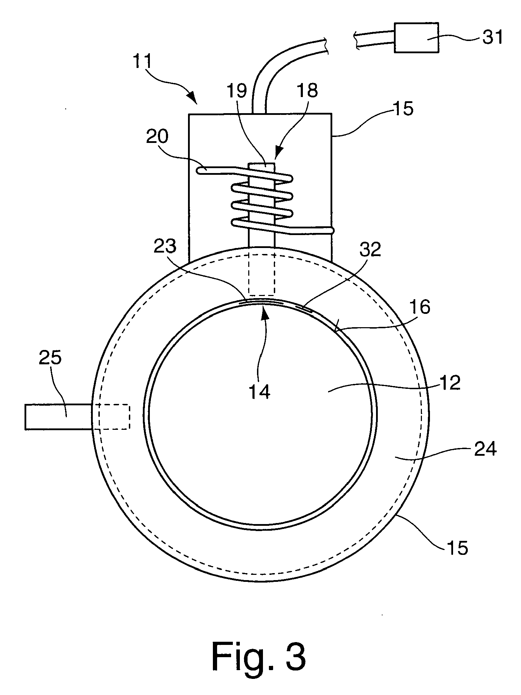

Eine alternative Ausführungsform einer Vorrichtung 11 ist in Figur 3 dargestellt. Bei dieser Ausführungsform ist die Druckkrafteinrichtung 24 als aufblasbaren Ring oder Reifen ausgebildet, welche den rohr- oder stabförmigen Gegenstand 12, wie bspw. eine Messwelle, vollständig umgibt. Bei dieser Ausführungsform fällt die Funktion der Halteeinrichtung 27 und der Druckkrafteinrichtung 24 zusammen. Durch Aufbringen der Haltekraft wird die Einrichtung 18 zum Gegenstand 12 positioniert. Gleichzeitig wird auch eine Anpresskraft auf den zumindest einen Messfühler 23 und gegebenenfalls einen Temperaturfühler 32 ausgeübt. Alternativ kann die Halteeinrichtung 27 als auch die Druckkrafteinrichtung 24 separat ausgebildet und auch separat ansteuerbar sein. Diese als ringförmige Luftkammer ausgebildete Druckkrafteinrichtung 24 weist des Weiteren den Vorteil auf, dass nicht nur runde Gegenstände 12 sondern auch in der Geometrie davon abweichende Gegenstände 12 zur Durchführung der Messung geeignet sind, da die Haltekrafteinrichtung 27 beziehungsweise die Druckkrafteinrichtung 24 an diese Geometrien anpassbar ist.

Im Übrigen gelten für diese Ausführungsform die Ausführungen zu der ersten Ausführungsform gemäß den Figuren 1 und 2.

Sämtliche Merkmale sind jeweils für sich betrachtet erfindungswesentlich und können beliebig miteinander kombinierbar sein.

## Patentansprüche

1. Verfahren zur zerstörungsfreien Messung von Oberflächenspannungen an Gegenständen (12), insbesondere mechanischen Eigenspannung, bei dem eine Vorrichtung (11) an einer Messstelle (14) auf eine Oberfläche (16) des Gegenstandes (12) aufgesetzt wird, wobei zumindest ein Messfühler (23) einer Längenmesseinrichtung der Vorrichtung (11) an der Oberfläche (16) des Gegenstandes (12) angreift, bei dem mit einer Einrichtung (18) zur Erzeugung einer Energie eine Temperaturänderung an der Messstelle (14) erzeugt wird und bei dem während zumindest einer Temperaturänderung eine Abstandsänderung zwischen zumindest zwei Messpunkten mit zumindest einem Messfühler (23) an oder nahe der Messstelle (14) erfasst wird, **dadurch gekennzeichnet, dass** nach dem Aufsetzen der Vorrichtung (11) an der Messstelle (14) der zumindest eine Messfühler (23) mit einer Anpresskraft zur Anlage auf der Oberfläche (16) des Gegenstandes (12) beaufschlagt wird.

2. Verfahren nach Anspruch 1, **dadurch gekennzeichnet, dass** nach dem Erreichen einer Anpresskraft zur Anlage des Messfühlers (23) auf dem Gegenstand (12) durch ein Sensor ein Signal ausgegeben wird und eine Temperaturänderung an der Messstelle (14) erzeugt wird.

3. Verfahren nach Anspruch 1, **dadurch gekennzeichnet, dass** die Abstandsänderung während eines Temperaturzyklus, während einer Aufheiz- oder Abkühlphase oder vor oder nach einer stufenweisen Temperaturerhöhung oder -absenkung erfasst wird.

4. Verfahren nach einem der Ansprüche 1 bis 3, **dadurch gekennzeichnet, dass** nach der Temperaturerfassung durch den zumindest einen Messfühler (23) ein Signal von einer Steuer- und Auswerteeinheit (31) an eine Druckkrafteinrichtung (24) ausgegeben und die Anpresskraft aufgehoben wird.

5. Vorrichtung zur zerstörungsfreien Messung von Oberflächenspannungen in Gegenständen (12), insbesondere zur Durchführung des Verfahrens nach einem der Ansprüche 1 bis 4, mit einer Einrichtung (18) zum Zuführen von Energie, die eine thermische Änderung einer Messstelle (14) auf der Oberfläche (16) des Gegenstandes (12) bewirkt und mit zumindest einem Messfühler (23) einer Längenmesseinrichtung, der für die Erfassung einer Abstandsänderung während thermischen Änderungen an der Messstelle (14) anordenbar ist, **dadurch gekennzeichnet, dass** zumindest eine Druckkrafteinrichtung (24) vorgesehen ist, welche zumindest einen Messfühler (23) mit einer Anpresskraft gegen die Oberfläche (16) des Gegenstands (12) beaufschlagt.

6. Vorrichtung nach Anspruch 5, **dadurch gekennzeichnet, dass** die Druckkrafteinrichtung (24) mit einem Sensor gekoppelt ist, der die Anpresskraft des zumindest einen Messfühlers (23) oder die erzeugte Druckkraft in der Druckkrafteinrichtung (24) überwacht.

7. Vorrichtung nach Anspruch 5 oder 6, **dadurch gekennzeichnet, dass** die Druckkrafteinrichtung (24) pneumatisch, hydraulisch, elektrisch oder mechanisch angetrieben ist.

8. Vorrichtung nach Anspruch 5, **dadurch gekennzeichnet, dass** die Druckkrafteinrichtung (24) zumindest eine Luftkammer aufweist, welche kissen- oder schlauchförmig ausgebildet ist.

9. Vorrichtung nach einem der Ansprüche 5 bis 8, **dadurch gekennzeichnet, dass** an einem Gehäuse (15) eine Halteeinrichtung (27) vorgesehen ist, welche eine Haltekraft, insbesondere eine Magnethaltekraft oder Saughaltekraft, zwischen dem Gehäuse (15) und dem Gegenstand (12) erzeugt.

10. Vorrichtung nach einem der Ansprüche 5 bis 9, **dadurch gekennzeichnet, dass** ein Drucksensor vorgesehen ist, der eine Mindestanpresskraft eines Gehäuses (15) zum Gegenstand (12) erfasst.

11. Vorrichtung nach Anspruch 5, **dadurch gekennzeichnet, dass** der Messfühler als Dehnmessstreifen ausgebildet ist.

12. Vorrichtung nach Anspruch 11, **dadurch gekennzeichnet, dass** mehrere einander zugeordnete Dehnmessstreifen vorgesehen sind, deren paarweise Ausrichtung beziehungsweise Ausrichtung von einander abweicht.

13. Vorrichtung nach einem der Ansprüche 5 bis 12, **dadurch gekennzeichnet, dass** die Einrichtung (18) zum Zuführen von Energie eine elektromagnetische Strahlungsquelle und zumindest ein Strahlführungselement erfasst, durch das die elektromagnetische Strahlung der Messstelle (14) zuführbar ist.

14. Vorrichtung nach einem der Ansprüche 5 bis 12, **dadurch gekennzeichnet, dass** die Einrichtung (18) zum Zuführen von Energie ein Kontaktelement umfasst, das insbesondere eine Heizwendel aufweist, das auf der Messstelle (14) aufsetzbar ist und vorzugsweise federgelagert und relativ zum Gehäuse verschiebbar angeordnet ist.

15. Vorrichtung nach einem der Ansprüche 5 bis 12, **dadurch gekennzeichnet, dass** die Einrichtung (18) zum Zuführen von Energie eine elektromagnetische Spule umfasst, die berührungslos zur Messstelle (14) positioniert ist.

16. Vorrichtung nach einem der Ansprüche 5 bis 15, **dadurch gekennzeichnet, dass** zumindest ein der Messstelle (14) zugeordneter Temperaturfühler (32) vorgesehen ist, der federnd auf der Messstelle (14) aufsetzbar vorgesehen ist, durch die Druckeinrichtung (24) an oder nahe der Messstelle (14) fixiert ist oder kontaktlos die Temperatur erfasst.
